# EUROPÄISCHE PATENTSCHRIFT

(11) **EP 2 702 266 B1**
(45) Veröffentlichungstag und Bekanntmachung des Hinweises auf die Patenterteilung: **30.05.2018**
(21) Anmeldenummer: 12715985.3
(22) Anmeldetag: 18.04.2012
(51) Int. Cl.: H02K 7/18, H02K 15/00, F03D 9/25

(54) **WINDENERGIEANLAGE**
WIND TURBINE
ÉOLIENNE

(30) Priorität: 29.04.2011 DE 102011017801
(43) Veröffentlichungstag der Anmeldung: 05.03.2014
(73) Patentinhaber: Wobben Properties GmbH, 26607 Aurich (DE)
(72) Erfinder: BRENNER, Albrecht, 26607 Aurich (DE); KNOOP, Frank, 26607 Aurich (DE); UBBEN, Matthias, 26721 Emden (DE)
(74) Vertreter: Eisenführ Speiser
(86) Internationale Anmeldenummer: PCT/EP2012/057091
(87) Internationale Veröffentlichungsnummer: WO 2012/146521

(56) Entgegenhaltungen:
- EP-A1- 1 412 638
- EP-A1- 1 659 286
- WO-A2-2010/103086

## Beschreibung

Die vorliegende Erfindung betrifft eine Windenergieanlage.

Für die Montage und Demontage von Rotorblättern einer Windenergieanlage sind verschiedene Konzepte bekannt.

DE 102 24 439 zeigt eine Windenergieanlage mit einer Umlenkrolle und einer Seildurchführung im Bereich des Turmkopfes der Windenergieanlage zur Durchführung eines Zugseiles von der Winde. Mittels dieses Zugseiles wird dann ein Rotorblatt zum Turmkopf hochgezogen und entsprechend befestigt.

DE 103 05 543 zeigt ein weiteres Verfahren zur Montage von Rotorblättern. Hierbei wird die Rotornabe in eine vorgegebene erste Position gedreht. Ein Rotorblatt wird angebracht, und die Rotornabe wird mit Hilfe des Rotorblattes in eine vorgegebene zweite Position gedreht. Die Drehung der Rotornabe erfolgt hierbei in Richtung der Schwerkraftwirkung des bereits montierten ersten Rotorblattes.

EP 1 412 638 zeigt ein weiteres Verfahren zur Montage von Rotorblättern. Hierbei werden bei der Montage statt der Rotorblätter Ausgleichsgewichte verwendet.

WO 2010/103086 A2 zeigt eine Windenergieanlage mit einer Bremsschreibe und einer Verschiebeeinheit, welche an ihrem ersten Ende mit dem Maschinenträger verbunden ist und an ihrem zweiten Ende an Löchern der Bremsscheibe befestigt ist.

Es ist eine Aufgabe der vorliegenden Erfindung, eine Windenergieanlage vorzusehen, welche eine Rotorblattmontage auch bei sehr hohen Windenergieanlagen ermöglicht.

Diese Aufgabe wird durch eine Windenergieanlage nach Anspruch 1 sowie durch ein Verfahren zur Montage bzw. Demontage eines Windenergieanlagen-Rotorblattes gemäß Anspruch 3 gelöst.

Somit wird eine Windenergieanlage mit einem Rotor, an welchen Rotorblätter montierbar sind, einem elektrischen Generator, der einen Generator-Stator und einen Generator-Rotor aufweist, und eine Mehrzahl von Verschiebeeinheiten vorgesehen. Der Generator-Stator weist eine Mehrzahl von Statorarmen zum Tragen des Statorringes auf. Das erste Ende der Verschiebeeinheit ist an einem Statorarm des Generator-Stators und das zweite Ende der Verschiebeeinheit ist an dem Generator-Rotor lösbar befestigt. Die Verschiebeeinheiten weisen jeweils einen Hydraulikzylinder auf, dessen Auslenkung steuerbar ist, so dass durch Betätigen der Verschiebeeinheiten der Generator-Rotor relativ zum Generator-Stator verschoben wird. Damit wird auch eine Drehung des Rotors bewirkt.

Gemäß einem Aspekt der vorliegenden Erfindung weist die Verschiebeeinheit an ihrem ersten Ende eine Konsole und an ihrem zweiten Ende eine Gabel auf. Die Konsole wird an dem Generator-Stator bzw. an einem festen Bauteil des Generator-Stators befestigt und die Gabel wird an dem Generator-Rotor befestigt. Der Hydraulikzylinder wird zwischen der Gabel und der Konsole vorgesehen.

Gemäß einem weiteren Aspekt der vorliegenden Erfindung wird die Gabel lösbar an einer Bremsscheibe des Generator-Rotors befestigt.

Die Erfindung betrifft ebenfalls ein Verfahren zur Montage oder Demontage von Rotorblättern einer Windenergieanlage. Die Windenergieanlage weist dabei einen Rotor und einen elektrischen Generator auf. Der Generator weist einen Generator-Stator und einen Generator-Rotor auf. Der Rotor ist mit dem Generator-Rotor gekoppelt. Ein erstes Ende einer Verschiebeeinheit wird an dem Generator-Stator befestigt. Ein zweites Ende der Verschiebeeinheit wird lösbar an dem Generator-Rotor befestigt. Die Verschiebeeinheiten weisen einen Hydraulikzylinder auf, dessen Auslenkung steuerbar ist. Der hydraulische Zylinder wird betätigt, um eine Auslenkung zu erreichen. Das zweite Ende einiger der Verschiebeeinheiten wird demontiert. Der Hydraulikzylinder einiger der Verschiebeeinheiten wird betätigt, um den Hydraulikzylinder zusammenzufahren. Das zweite Ende der Verschiebeeinheit wird wiederum an dem Generator-Rotor erneut montiert. Anschließend erfolgt ein erneutes Betätigen des Hydraulikzylinders, um den Hydraulikzylinder auszulenken und somit eine relative Verschiebung zwischen dem Generator-Stator und dem Generator-Rotor und damit auch eine Drehung des Rotors zu bewirken,

Die Erfindung betrifft ebenfalls eine Verwendung einer Verschiebeeinheit mit einem Hydraulikzylinder zur Bewirkung einer relativen Verschiebung zwischen einem Generator-Rotor und einem Generator-Stator eines Generators einer Windenergieanlage. Ein erstes Ende der Verschiebeeinheit wird dabei an den Generator-Stator und das zweite Ende der Verschiebeeinheit wird an dem Generator-Rotor befestigt. Durch Auslenkung des hydraulischen Zylinders erfolgt eine relative Bewegung zwischen dem Generator-Rotor und dem Generator-Stator.

Dadurch, dass der Rotor der Windenergieanlage vorzugsweise fest mit dem Generator-Rotor gekoppelt ist, führt eine Drehung des Generator-Rotors auch zu einer Drehung des Rotors der Windenergieanlage. Somit kann durch schrittweise Verschiebung des Generator-Rotors relativ zum Generator-Stator eine Drehung des Generator-Rotors und somit auch eine Drehung des Rotors der Windenergieanlage bewirkt werden.

Die Erfindung betrifft den Gedanken, zwischen einem Stator und einem Rotor des Generators der Windenergieanlage mindestens eine Verschiebeeinheit beispielsweise mit mindestens einem hydraulischen Zylinder vorzusehen. Die Verschiebeeinheit ist dabei demontierbar ausgestaltet, so dass sie lediglich bei der Montage oder Demontage von Rotorblättern der Windenergieanlage verwendet wird. Für den eigentlichen Betrieb der Windenergieanlage werden die Verschiebeeinheiten dann demontiert. Vorzugsweise sind eine Mehrzahl von Verschiebeeinheiten um den Umfang des Stators bzw. des Rotors des Generators herum angeordnet. Durch Aktivierung der hydraulischen Zylinder (Ausfahren des Zylinders) der Verschiebeeinheiten kann der Rotor um einen vorgegebenen Winkel bezüglich des Stators gedreht werden. Da die hydraulischen Zylinder der Verschiebeeinheiten lediglich über einen begrenzten Hub verfügen, kann eine Verschiebung des Rotors des Generators und damit auch der an dem Spinner bzw. dem Rotor der Windenergieanlage befestigten Rotorblätter lediglich schrittweise bzw. abschnittsweise erfolgen. Hierzu kann es nötig sein, die Verschiebeeinheiten zumindest teilweise zu demontieren und an anderer Stelle wieder zu montieren, wobei hierbei jedoch eine der Verschiebeeinheiten montiert bleiben sollte, um eine gewisse Bremswirkung zu gewährleisten.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Ansicht eines Generators einer Windenergieanlage gemäß einem ersten Ausführungsbeispiel,
- Fig. 2: zeigt eine schematische Darstellung eines Ausschnitts des Generators der Windenergieanlage gemäß dem ersten Ausführungsbeispiel,
- Fig. 3: zeigt einen weiteren Ausschnitt einer schematischen Darstellung des Generators einer Windenergieanlage gemäß dem ersten Ausführungsbeispiel,
- Fig. 4: zeigt einen weiteren vergrößerten Ausschnitt eines Generators einer Windenergieanlage gemäß dem ersten Ausführungsbeispiel,
- Fig. 5: zeigt eine perspektivische Ansicht einer Gabel einer Verschiebeeinheit in dem Generator der Windenergieanlage gemäß dem ersten Ausführungsbeispiel,
- Fig. 6A und 6B: zeigen verschiedene perspektivische Ansichten einer Verschiebeeinheit für einen Generator einer Windenergieanlage gemäß einem zweiten Ausführungsbeispiel, und
- Fig. 7: zeigt eine schematische Darstellung einer Windenergieanlage gemäß der Erfindung.

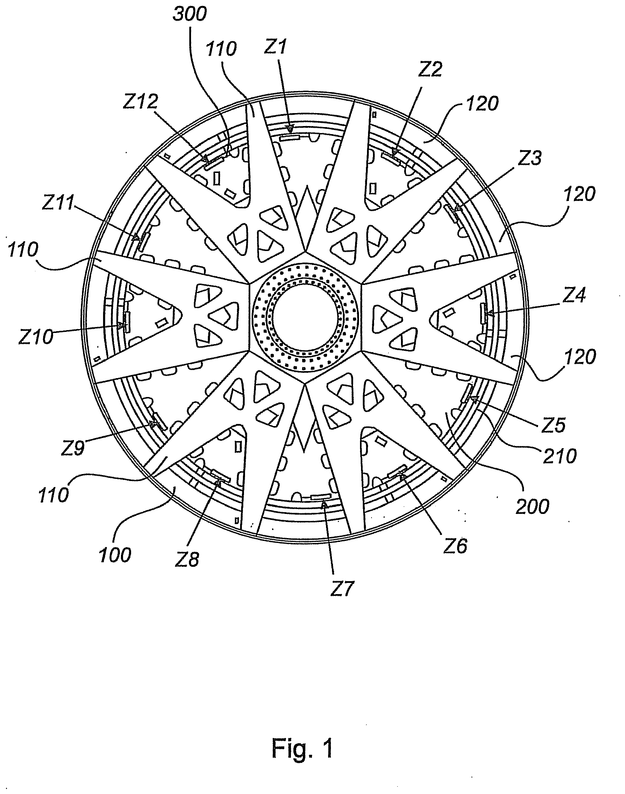

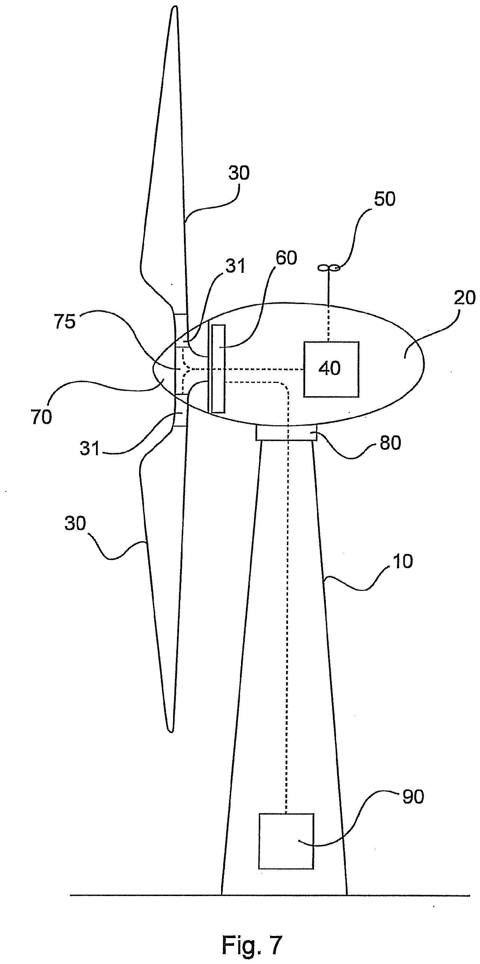

Fig. 1 zeigt eine schematische Ansicht eines Generators einer Windenergieanlage gemäß einem ersten Ausführungsbeispiel. Die Windenergieanlage gemäß der Erfindung weist einen Turm, eine Gondel auf dem Turm und einen Rotor auf (s. Fig. 7). Der Rotor der Windenergieanlage stellt den sich drehenden Teil der Windenergieanlage, d. h. z. B. die Rotorblätter und die Rotornabe dar. Der Generator der Windenergieanlage ist vorzugsweise innerhalb einer (nicht gezeigten) Gondel einer Windenergieanlage vorgesehen. Der Generator besteht aus einem Generator-Stator 100 und einem Generator-Rotor 200. Der Rotor der Windenergieanlage ist mit dem Generator-Rotor verbunden, so dass eine Drehung des Rotors auch eine Drehung des Generator-Rotors 200 und umgekehrt bewirkt. Der Generator-Stator 100 weist mehrere Statorarme 110 auf, welche einen Statorring 120 tragen. Innerhalb des Statorringes ist der Rotor 200 des Generators vorgesehen. Ferner sind zwölf Verschiebeeinheiten 300 vorgesehen. Diese Verschiebeeinheiten 300 können jeweils einen hydraulischen Zylinder Z1 - Z12 aufweisen. Das erste Ende der Verschiebeeinheit ist dabei an einem der Statortragarme 110 befestigt, während das zweite Ende an dem Rotor 200 des Generators befestigt ist. Durch Betätigen der jeweiligen Verschiebeeinheiten 300 kann der Rotor relativ zu dem Stator verschoben werden.

In Fig. 1 sind zwölf Verschiebeeinheiten jeweils zwischen zwei benachbarten Statortragarmen vorgesehen. Es können jedoch erfindungsgemäß auch weniger als zwölf bzw. mehr als zwölf Verschiebeeinheiten vorgesehen werden.

Gemäß der Erfindung werden die Verschiebeeinheiten zwischen dem Generator-Rotor und dem Generator-Stator vorgesehen, so dass eine Betätigung der hydraulischen Zylinder der Verschiebeeinheiten auch zu einer relativen Verschiebung zwischen dem Generator-Rotor und dem Generator-Stator führt.

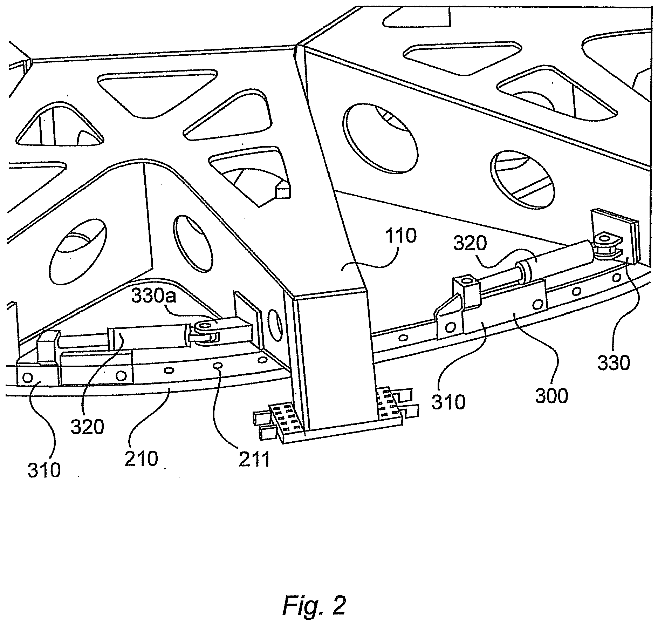

Fig. 2 zeigt eine schematische perspektivische Ansicht eines Ausschnitts des Generators gemäß dem ersten Ausführungsbeispiel von Fig. 1. In Fig. 2 sind einige Teile des Generators wie beispielsweise der Statorring sowie weitere Teile des Rotors nicht gezeigt. In Fig. 2 ist lediglich ein Teil 210 des Rotors gezeigt. Das Teil (z. B. eine Bremsscheibe des Rotors) 210 weist vorzugsweise eine Mehrzahl von Löchern 211 auf. Die Verschiebeeinheit 300 weist an ihrem ersten Ende eine Gabel 310 und an ihrem zweiten Ende eine Konsole 330 auf. Zwischen der Gabel 310 und der Konsole 330 wird ein hydraulischer Zylinder 320 vorgesehen. Die Gabel 310 wird beispielsweise mittels Bolzen oder einer Verschraubung in den Löchern 211 befestigt. Die Konsole 330 wird an einem der Statortragarme 110 befestigt. Vorzugsweise werden die Konsolen 330 jeweils entweder an der linken oder rechten Seite des Statortragarms 310 befestigt.

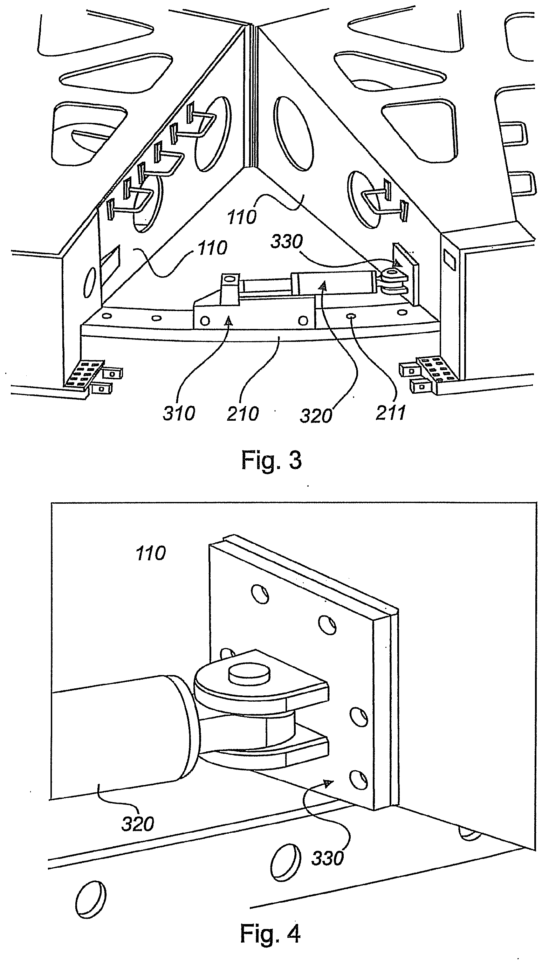

Fig. 3 zeigt einen weiteren Ausschnitt eines Generators gemäß einem ersten Ausführungsbeispiel. Auch in Fig. 3 sind einige Teile des Generators wie beispielsweise der Statorring nicht gezeigt. Die Verschiebeeinheit 300 weist an ihrem ersten Ende eine Gabel 310 und an ihrem zweiten Ende eine Konsole 330 auf. Zwischen der Konsole 330 und der Gabel 310 ist ein Hydraulikzylinder 320 vorgesehen. Die Gabel 310 weist mindestens ein Loch auf, durch welches die Gabel in Löcher 211 eines Teils 210 des Rotors lösbar befestigt werden kann.

Fig. 4 zeigt eine perspektivische Ansicht des zweiten Endes der Verschiebeeinheit von Fig. 3. Hierbei ist die Konsole 330 der Verschiebeeinheit an einem Statorarm 110 lösbar befestigt. Dies kann beispielsweise über eine Verschraubung erfolgen. In Fig. 4 ist ebenfalls ein Ende des Hydraulikzylinders 320 gezeigt.

Gemäß der Erfindung kann die Konsole unterschiedliche Längen aufweisen, so dass die Verschiebeeinheit an die entsprechenden Einbausituationen in der Windenergieanlage angepasst werden kann.

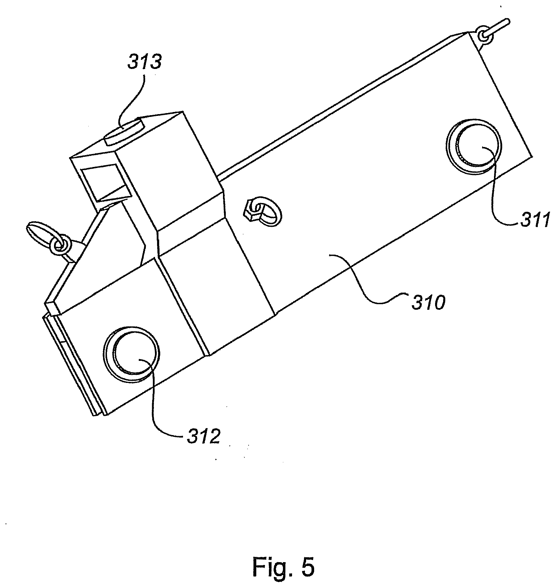

Fig. 5 zeigt eine schematische Ansicht der Gabel 310 gemäß dem ersten Ausführungsbeispiel. Die Gabel weist zwei Löcher 311, 312 auf. Diese Löcher dienen dazu, die Gabel an dem Teil 210 des Rotors zu befestigen. Die Gabel weist ferner einen Abschnitt 313 auf, welcher dazu dient, ein Ende eines Hydraulikzylinders aufzunehmen.

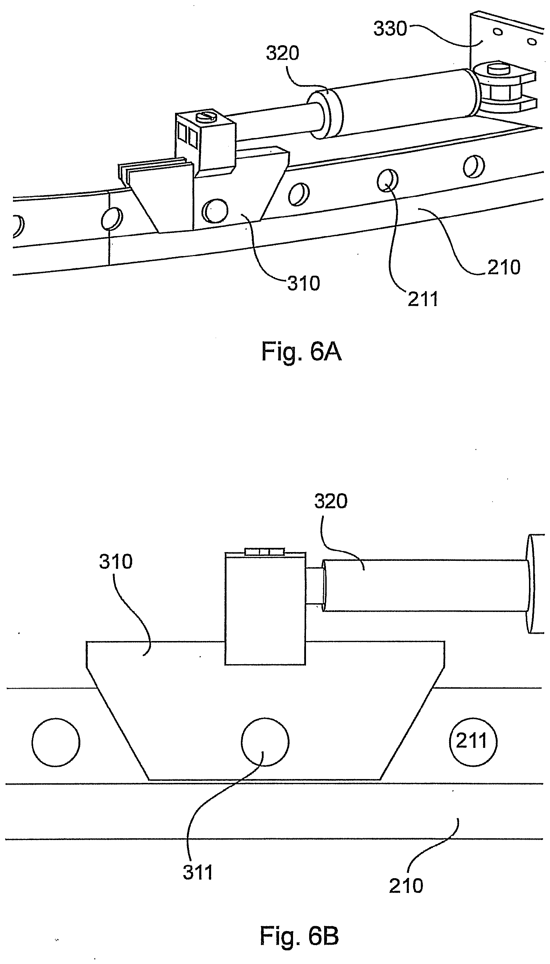

Fig. 6A und 6B zeigen zwei schematische Ansichten einer Verschiebeeinheit für einen Generator gemäß einem zweiten Ausführungsbeispiel. Die Verschiebeeinheit 300 weist eine Gabel 310, eine Konsole 330 sowie dazwischen einen hydraulischen Zylinder 320 auf. Die Gabel 310 weist ein Loch 311 auf, mittels welchem die Gabel an dem Teil 210 lösbar befestigt werden kann. Die Konsole 330 kann ebenfalls lösbar an einem Tragarm eines Stators des Generators befestigt werden.

Die Hydraulikzylinder gemäß dem ersten und zweiten Ausführungsbeispiel weisen beispielsweise optional einen Betriebsdruck von 700 bar, eine Druckkraft von 72 t, eine Zugkraft von 50 t und ein Gewicht von beispielsweise 54 kg auf.

Die demontierbaren Verschiebeeinheiten gemäß dem ersten und zweiten Ausführungsbeispiel der Erfindung werden insbesondere bei der Montage und Demontage von Rotorblättern einer Windenergieanlage verwendet. Durch die Verwendung der erfindungsgemäßen Verschiebeeinheiten kann insbesondere bei sehr großen Windenergieanlagen auf einen Kran verzichtet werden, der ansonsten typischerweise zum Drehen des Rotors (Spinner) der Windenergieanlage verwendet wird. Die Verschiebeeinheiten werden an ihrem einen Ende z. B. an einer Bremsscheibe des Rotors und an ihrem zweiten Ende an einem Tragarm des Stators des Generators befestigt.

Die Verschiebeeinheiten gemäß der Erfindung können eine Verschiebung (relativ zwischen Generator-Rotor und -Stator) von beispielsweise einigen Grad bewirken. Mit dem Einsatz der erfindungsgemäßen Verschiebeeinheiten kann ein Rotor (Spinner) der Windenergieanlage auch dann gedreht werden, wenn bereits ein oder zwei Rotorblätter daran befestigt sind. Damit lässt sich also auch ein Drehen unter Last gewährleisten. Wenn mindestens eine der Verschiebeeinheiten montiert ist, dann kann diese Verschiebeeinheit auch zur Begrenzung einer Drehung verwendet werden, da die Drehung nie mehr als der Hubweg der hydraulischen Zylinder betragen kann.

Gemäß der Erfindung können die Konsolen 330 eine unterschiedliche Länge aufweisen, um an unterschiedliche Einbausituationen angepasst zu werden.

Die erfindungsgemäßen Verschiebeeinheiten können dabei derart ausgestaltet sein, dass beispielsweise beim ersten Ausführungsbeispiel lediglich zehn der zwölf Verschiebeeinheiten benötigt werden, um den Rotor zu drehen.

Die erfindungsgemäßen Verschiebeeinheiten werden insbesondere bei der Montage oder Demontage von Rotorblättern einer Windenergieanlage verwendet. Mittels der erfindungsgemäßen Verschiebeeinheiten kann ein Anschluss für ein Rotorblatt in eine 9-Uhr-Position gedreht werden, damit ein Rotorblatt montiert werden kann. Anschließend kann die Gondel um 180° gedreht werden. Danach werden die hydraulischen Zylinder der Verschiebeeinheiten ausgefahren, und der Generator-Rotor kann sich beispielsweise um 3,75° bewegen (damit bewegt sich auch der Rotor der Windenergieanlage, da diese miteinander gekoppelt sind). Anschließend können beispielsweise zwei Zylinder gelöst werden, während die anderen Zylinder das ganze System halten. Die Kolbenstangen der hydraulischen Zylinder werden eingefahren und die Gabel sowie die Konsole werden gelöst und können erneut, d. h. an anderer Stelle, befestigt werden. Anschließend werden weitere der beispielsweise zehn Verschiebeeinheiten demontiert und an anderer Stelle wieder montiert. Alternativ dazu kann die Demontage und erneute Montage entfallen, nämlich indem lediglich die Gabel von der Bremsscheibe demontiert und an anderer Stelle wieder montiert wird. Beispielsweise müssen gemäß der Erfindung 16 Hubdurchgänge durchgeführt werden, um den Rotor des Generators um 60° zu drehen, so dass der nächste Blattadapter sich auf der Neun-Uhr-Position befindet und das nächste Rotorblatt befestigt werden kann. Alternativ dazu kann der Anschluss auch in eine 6-Uhr-Position gedreht werden und das Blatt kann mit einem Seilsystem von unten montiert werden und danach um 120° weiter gedreht werden.

Anschließend muss der Rotor der Windenergieanlage um 120° gedreht werden, damit das nächste Rotorblatt an dem dritten Blattadapter befestigt werden kann.

Fig. 7 zeigt eine schematische Darstellung einer Windenergieanlage gemäß der Erfindung. Die Windenergieanlage weist einen Turm 10 und eine Gondel 20 auf dem Turm 10 auf. Die Azimutausrichtung der Gondel kann mittels eines Azimutantriebs 80 verändert werden, um die Ausrichtung der Gondel an die aktuelle Windrichtung anzupassen. Die Gondel 20 weist einen drehbaren Rotor 70 mit mindestens zwei, vorzugsweise drei Rotorblättern 30 auf. Die Rotorblätter 30 können mit einer Rotornabe 75 verbunden werden, welche wiederum direkt oder mittels eines (nicht dargestellten) Getriebes mit einem elektrischen Generator 60 verbunden ist. Durch Drehen der Rotorblätter 30 und des Rotors 70 wird der Generator-Rotor gedreht und es kommt damit zu einer Erzeugung von elektrischer Energie.

Die Windenergieanlage kann ferner eine Steuereinheit 40 zum Steuern des Betriebs der Windenergieanlage auf. Auf der Gondel 20 können ferner ein Anemometer und/oder ein Windrichtungsanzeiger 50 vorgesehen sein. Die Steuereinheit 40 kann den Pitchwinkel der Rotorblätter 30 mittels der Pitchantriebe 31 verstellen. Ferner kann die Steuereinheit 40 die Azimutausrichtung der Gondel mittels des Azimutantriebs 80 steuern. Die von dem Generator 60 erzeugte elektrische Energie kann optional an einen Leistungsschrank 90 z. B. im Fuß des Turms 10 weitergeleitet werden. In dem Leistungsschrank 90 kann ein Umrichter vorgesehen werden, der die elektrische Leistung mit einer gewünschten Spannung und Frequenz an ein Energieversorgungsnetz ausgeben kann.

Die Drehung des Rotors 70 (z. B. zur Rotorblattmontage) kann gemäß dem ersten oder zweiten Ausführungsbeispiel erfolgen.

## Patentansprüche

1. Windenergieanlage, mit
einem Rotor (70), an welchem Rotorblätter (30) montierbar sind,
einem elektrischen Generator (60), der einen Generator-Stator (100) und einen Generator-Rotor (200) aufweist,
wobei der Generator-Stator (100) eine Mehrzahl von Statorarmen (110) zum Tragen eines Statorringes (120) aufweist,
wobei der Rotor (70) direkt mit dem Generator-Rotor (200) gekoppelt ist, so dass eine Rotation des Rotors (70) direkt eine Rotation des Generator-Rotors und umgekehrt bewirkt, und
einer Mehrzahl von Verschiebeeinheiten (300), welche mit einem ersten Ende an dem Generator-Stator (100) und einem zweiten Ende an dem Generator-Rotor (200) während einer Montage oder Demontage der Rotorblätter (30) lösbar befestigt werden, wobei die Verschiebeeinheiten (300) jeweils einen Hydraulikzylinder (320) aufweisen, dessen Auslenkung steuerbar ist, so dass durch Betätigen der Verschiebeeinheit (300) der Generator-Rotor (200) relativ zum Generator-Stator (100) verschoben wird und eine Drehung des Rotors (70) bewirkt wird,
wobei die Verschiebeeinheit (300) an ihrem ersten Ende eine Konsole (330) und an ihrem zweiten Ende eine Gabel (310) aufweist, wobei die Konsole (330) direkt an einem der Mehrzahl der Statorarme (110) des Generator-Stators (100) und die Gabel (310) direkt an dem Generator-Rotor (200) befestigt wird,
wobei der Hydraulikzylinder zwischen der Gabel (310) und der Konsole (330) vorgesehen ist.

2. Windenergieanlage nach Anspruch 1, wobei
die Gabel (310) lösbar an einer Bremsscheibe des Generator-Rotors (200) befestigt ist.

3. Verfahren zur Montage oder Demontage von Rotorblättern (30) einer Windenergieanlage, wobei die Windenergieanlage einen Rotor (70) und einen elektrischen Generator (60) aufweist, der einen Generator-Stator (100) und einen Generator-Rotor (200) aufweist, wobei der Generator-Stator (100) eine Mehrzahl von Statorarmen (110) zum Tragen eines Statorringes (120) aufweist, wobei der Rotor (70) direkt mit dem Generator-Rotor (200) gekoppelt ist, so dass eine Rotation des Rotors (70) direkt eine Rotation des Generator-Rotors und umgekehrt bewirkt, mit den Schritten:
Befestigen eines ersten Endes einer Verschiebeeinheit mit einer Konsole (330) direkt an einem der Mehrzahl der Statorarme (110) des Generator-Stators (100),
Befestigen eines zweiten Endes der Verschiebeeinheit mit einer Gabel (310) direkt an dem Generator-Rotor (200),
wobei die Verschiebeeinheit einen Hydraulikzylinder aufweist, dessen Auslenkung steuerbar ist,
Betätigen des Hydraulikzylinders, um eine Auslenkung des Hydraulikzylinders zu erreichen,
Demontieren der zweiten Enden eines ersten Satzes von Verschiebeeinheiten,
Betätigen der Hydraulikzylinder des ersten Satzes von Verschiebeeinheiten, um den Hydraulikzylinder zusammen zu fahren,
erneutes Montieren des zweiten Endes des ersten Satzes von Verschiebeeinheiten an dem Generator-Rotor (200), und
erneutes Betätigen der Hydraulikzylinder, um den Hydraulikzylinder auszulenken und somit eine relative Verschiebung zwischen dem Generator-Stator (100) und dem Generator-Rotor (200) und damit auch eine Drehung des Rotors (70) zu bewirken.

## Claims

1. A wind power installation comprising
a rotor (70) to which rotor blades (30) can be fitted,
an electric generator (60) having a generator stator (100) and a generator rotor (200),
wherein the generator stator (100) comprises a plurality of stator arms (110) for carrying a stator ring (120),
wherein the rotor (70) is directly coupled to the generator rotor (200) such that rotation of the rotor (70) directly causes rotation of the generator rotor and vice versa, and
a plurality of displacement units (300) which are during fitting or removing of the rotor blade (30) releasably fastened with a first end to the generator stator (100) and a second end to the generator rotor (200),
wherein the displacement units (300) each have a respective hydraulic cylinder (320), the deflection of which is controllable so that by actuation of the displacement unit (300) the generator rotor (200) is displaced relative to the generator stator (100) and rotation of the rotor (70) is effected,
wherein the displacement unit (300) has a bracket (330) directly at its first end and a fork (310) at its second end, wherein the bracket (330) is directly fastened to on one of the plurality of stator arms (110) of the generator stators (100) and the fork (310) is directly fastened to the generator rotor (200),
wherein the hydraulic cylinder is provided between the fork (310) and the bracket (330).

2. A wind power installation according to claim 1
wherein the fork (310) is releasably fastened to a brake disc of the generator rotor (200).

3. A method of fitting or removing rotor blades (30) of a wind power installation, wherein the wind power installation has a rotor (70) and an electric generator (60) having a generator stator (100) and a generator rotor (200), wherein the generator stator (100) comprises a plurality of stator arms (110) for carrying a stator ring (120),
wherein the rotor (70) is directly coupled to the generator rotor (200) such that rotation of the rotor (70) directly causes rotation of the generator rotor and vice versa, comprising the steps:
fastening a first end of a displacement unit with a bracket (330) directly on one of the plurality of stator arms (110) of the generator stators (100),
fastening a second end of the displacement unit with a fork (310) directly to the generator rotor (200),
wherein the displacement unit has a hydraulic cylinder, the deflection of which is controllable,
actuating the hydraulic cylinder to achieve deflection of the hydraulic cylinder,
removing the second end of a first set of displacement elements,
actuating the hydraulic cylinders of the first set of displacement units to contract the hydraulic cylinder,
again fitting the second end of the first set of displacement units to the generator rotor (200), and
again actuating the hydraulic cylinders to deflect the hydraulic cylinder and thus cause relative displacement between the generator stator (100) and the generator rotor (200) and thus also rotation of the rotor (70).

## Revendications

1. Eolienne, comprenant
un rotor (70), au niveau duquel des pales de rotor (30) peuvent être montées,
un générateur (60) électrique, qui présente un stator de générateur (100) et un rotor de générateur (200),
dans laquelle le stator de générateur (100) présente une multitude de bras de stator (110) servant à supporter une bague de stator (120),
dans laquelle le rotor (70) est couplé directement au rotor de générateur (200) de sorte qu'une rotation du rotor (70) entraîne directement une rotation du rotor de générateur, et inversement, et
une multitude d'unités coulissantes (300), qui sont fixées de manière amovible par une première extrémité au niveau du stator de générateur (100) et par une deuxième extrémité au niveau du rotor de générateur (200) au cours d'un montage ou démontage des pales de rotor (30),
dans laquelle les unités coulissantes (300) présentent respectivement un cylindre hydraulique (320), dont la course peut être commandée de sorte que le rotor de générateur (200) est coulissé par rapport au stator de générateur (100) du fait de l'actionnement de l'unité coulissante (300) et une rotation du rotor (70) est entraînée,
dans laquelle l'unité coulissante (300) présente, au niveau de sa première extrémité, une console (330) et, au niveau de sa deuxième extrémité, une fourche (310), dans laquelle la console (330) est fixée directement au niveau d'un de la multitude de bras de stator (110) du stator de générateur (100) et la fourche (310) est fixée directement au niveau du rotor de générateur (200),
dans laquelle le cylindre hydraulique est prévu entre la fourche (310) et la console (330).

2. Eolienne selon la revendication 1, dans laquelle
la fourche (310) est fixée de manière amovible au niveau d'un disque de frein du rotor de générateur (200) .

3. Procédé servant au montage ou au démontage de pales de rotor (30) d'une éolienne, dans lequel l'éolienne présente un rotor (70) et un générateur (60) électrique, qui présente un stator de générateur (100) et un rotor de générateur (200), dans lequel le stator de générateur (100) présente une multitude de bras de stator (110) servant à supporter une bague de stator (120), dans lequel le rotor (70) est couplé directement au rotor de générateur (200) de sorte qu'une rotation du rotor (70) entraîne directement une rotation du rotor de générateur, et inversement, comprenant les étapes consistant à :
fixer une première extrémité d'une unité coulissante par une console (330) directement au niveau d'un de la multitude de bras de stator (110) du stator de générateur (100),
fixer une deuxième extrémité de l'unité coulissante par une fourche (310) directement au niveau du rotor de générateur (200),
dans lequel l'unité coulissante présente un cylindre hydraulique, dont la course peut être commandée,
actionner le cylindre hydraulique afin d'atteindre une déviation du cylindre hydraulique,
démonter la deuxième extrémité d'un premier ensemble d'unités coulissantes,
actionner les cylindres hydrauliques du premier ensemble d'unités coulissantes afin de déplacer ensemble le cylindre hydraulique,
monter à nouveau la deuxième extrémité du premier ensemble d'unités coulissantes au niveau du rotor de générateur (200), et
actionner à nouveau les cylindres hydrauliques afin de dévier le cylindre hydraulique et ainsi d'entraîner un coulissement relatif entre le stator de générateur (100) et le rotor de générateur (200) et ainsi également une rotation du rotor (70).
